(19)

Europäisches
Patentamt
European
Patent Office
Office européen
des brevets

(11) **EP 2 001 144 A1**

(12) **EUROPEAN PATENT APPLICATION**
published in accordance with Art. 153(4) EPC

(43) Date of publication:
**10.12.2008 Bulletin 2008/50**

(21) Application number: **06730213.3**

(22) Date of filing: **28.03.2006**

(51) Int Cl.:
**H04B 7/08** (2006.01)

(86) International application number:
**PCT/JP2006/306265**

(87) International publication number:
**WO 2007/110925 (04.10.2007 Gazette 2007/40)**

(84) Designated Contracting States:
**DE FR GB**

(71) Applicant: **Panasonic Corporation**
**Kadoma-shi**
**Osaka 571-8501 (JP)**

(72) Inventors:
- **IZUMI, Keiko**
**matsushita Electric Industrial Co., Ltd.**
**2-1-61, Shiromi, Chuo-ku**
**Osaka 540-6207 (JP)**
- **IMAGAWA, Yasumi**
**matsushita Electric Industrial Co., Ltd.**
**2-1-61, Shiromi, Chuo-ku**
**Osaka 540-6207 (JP)**
- **SASAKI, Makoto**
**matsushita Electric Industrial Co., Ltd.**
**2-1-61, Shiromi, Chuo-ku**
**Osaka 540-6207 (JP)**

- **KAGA, Satoshi**
**matsushita Electric Industrial Co., Ltd.**
**2-1-61, Shiromi, Chuo-ku**
**Osaka 540-6207 (JP)**
- **SHIOYA, Hiroyuki**
**matsushita Electric Industrial Co., Ltd.**
**2-1-61, Shiromi, Chuo-ku**
**Osaka 540-6207 (JP)**
- **YOKONAGA, Hiroyuki**
**matsushita Electric Industrial Co., Ltd.**
**2-1-61, Shiromi, Chuo-ku**
**Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **DIVERSITY RECEIVER AND RECEIVING-MODE SWITCHING METHOD**

(57) An object of the invention is to provide a diversity receiver and a reception system switching method capable of controlling diversity reception start and stop according to the switch condition responsive to person's liking and the use environment.

An input section (109) allows the user to select and specify any of a diversity reception mode using two reception channels at all times, a single reception mode using a single reception channel at all times, or an automatic control reception mode for switching between the diversity reception and the single reception in response to the reception state of each mode, and a control section (107) determines a switching determination condition used in the automatic control reception mode according to mode selection information of other two modes. If the diversity reception selection frequency is large, the control section changes the determination condition to a determination condition for increasing the switching frequency to the diversity reception; if the single reception selection frequency is large, the control section changes the determination condition to a determination condition for increasing the switching frequency to the single reception.

FIG. 1

**Description**

Technical Field

This invention relates to a diversity receiver and a reception system switching method.

Background Art

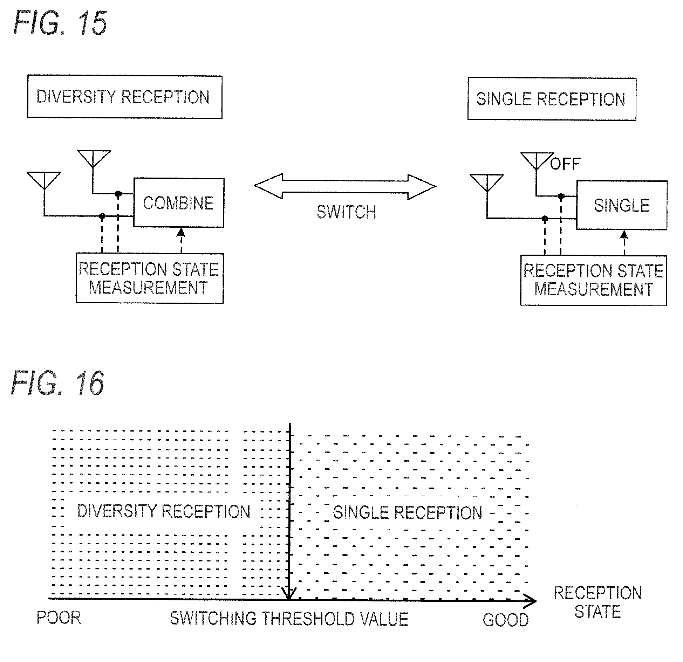

Hitherto, a diversity receiver including a plurality of reception branches for improving the reception quality has been proposed (for example, refer to patent document 1). The diversity receiver in the related art measures the reception state of each of wireless signals captured in two antennas (CNR (Carrier to Noise Ratio)), BER (Bit Error Rate)), PER (Packet Error Rate)), or electric field strength and switches between diversity reception and single reception based on the result, for example, as shown in FIG. 15. Specifically, the measured reception state is compared with the switch determination condition (threshold value) and diversity start or stop is determined, as shown in FIG. 16. Since two antennas are used, the diversity reception has the advantage that reception sensitivity is obtained; on the other hand, the diversity reception has the disadvantage in that consumption current increases. Since the antenna in a better reception state, of the two antennas is used, the single reception has the advantage that consumption current is small; on the other hand, the single reception has the disadvantage in that sufficient reception sensitivity is not obtained.
Patent document 1: JP-A-6-284062

Disclosure of the Invention

Problems to be Solved by the Invention

However, in the diversity receiver in the related art, user's liking and use environment are not reflected on the switching between diversity reception and single reception; this is a problem. For example, even if the user desires diversity reception to view a movie with high quality, if the reception state is good, the mode is switched to single reception. Although news not necessarily requiring high quality is sufficiently received in single reception, the mode is switched to diversity reception if the reception state is poor. Since all reception channels are used, the power consumption of the diversity reception increases and it is not preferable from the viewpoint of power consumption that diversity reception is often used in broadcast only with audio.
It is therefore an object of the invention to provide a diversity receiver and a reception system switching method capable of controlling diversity reception start and stop according to the switching determination condition responsive to person's liking and the use environment.

Means for Solving the Problems

The object is accomplished according to the following configuration and method:

A diversity receiver of the invention is a diversity receiver including a plurality of reception channels for switching between diversity reception using a plurality of reception channels and single reception using a single reception channel, and includes an input section for allowing the user to select and specify any of a diversity reception mode using the plurality of reception channels at all times, a single reception mode using a single reception channel at all times, or an automatic control reception mode for switching between the diversity reception and the single reception in response to the reception state of each mode; and a reception system switching section for determining a determination condition to switch between the diversity reception and the single reception in response to mode selection information of other two modes in the automatic control reception mode and switching the reception system.

The reception system switching section uses the selection rate of each mode as the mode selection information.
The reception system switching section uses the reception quality at the selection time of each mode as the mode selection information.
The diversity receiver includes a power supply voltage measurement section for detecting the remaining amount of a battery used in the receiver main unit, and the reception system switching section also uses the battery remaining amount at the selection time of each mode as the mode selection information.
The diversity receiver includes a program genre detection section for detecting the genre of a program being viewed; and a genre-by-genre threshold value storage section for storing the determination condition for each genre, and the reception system switching section sets the determination condition for each genre of the program being viewed.

A reception system switching method of the invention is a reception system switching method for switching between diversity reception using a plurality of reception channels and single reception using a single reception channel, the reception system switching method of allowing a user to select any of a diversity reception mode using the plurality of reception channels at all times, a single reception mode using a single reception channel at all times, or an automatic control reception mode for switching between the diversity reception and the single reception in response to the reception state of each mode and if the automatic control reception mode is selected, determining a determination condition to switch between the diversity reception and the single reception in response to mode selection information of other two modes in the automatic control reception mode and switching the reception system.

Advantages of the Invention

The diversity receiver of the invention can control diversity reception start and stop according to the switching determination condition responsive to person's liking and the use environment. Accordingly, for example, the diversity reception is frequently used for the user who wants to enjoy a movie with high sound quality and the single reception is frequently used for the user who wants to enjoy news. The single reception is frequently used, whereby it is made possible to suppress power consumption and to operate the receiver with a battery, the battery duration can be prolonged.

Brief Description of the Drawings

FIG. 1 is a block diagram to show the schematic configuration of a diversity receiver according to a first embodiment of the invention.

FIG. 2 is a drawing to show the operation face of the diversity receiver according to the first embodiment of the invention.

FIG. 3 is a drawing to describe a determination condition in the diversity receiver according to the first embodiment of the invention.

FIG. 4 is a drawing to show a state transition example in the diversity receiver according to the first embodiment of the invention.

FIG. 5 is a flowchart to describe the operation of the diversity receiver according to the first embodiment of the invention.

FIG. 6 is a flowchart to describe the operation of an application example of the diversity receiver according to the first embodiment of the invention.

FIG. 7 is a drawing to show a state transition example in the application example of the diversity receiver according to the first embodiment of the invention.

FIG. 8 is a block diagram to show the schematic configuration of a diversity receiver according to a second embodiment of the invention.

FIG. 9 is a drawing to describe a determination condition in the diversity receiver according to the second embodiment of the invention.

FIG. 10 is a drawing to describe a determination condition in the diversity receiver according to the second embodiment of the invention.

FIG. 11 is a flowchart to describe the operation of the diversity receiver according to the second embodiment of the invention.

FIG. 12 is a block diagram to show the schematic configuration of a diversity receiver according to a third embodiment of the invention.

FIG. 13 is a drawing to describe a determination condition in the diversity receiver according to the third embodiment of the invention.

FIG. 14 is a flowchart to describe the operation of an application example of the diversity receiver according to the third embodiment of the invention.

FIG. 15 is a drawing to describe a switching method between diversity reception and single reception in a diversity receiver in a related art.

FIG. 16 is a drawing to describe the switching method between diversity reception and single reception in the diversity receiver in the related art.

Description of Reference Numerals

100, 101 Antenna

102, 103 Tuner

104, 105 Demodulation section

106 Selection/combining section

107 Control section

108 Reception quality detection section

109 Input section

110 Error correction section

111 Power supply voltage measurement section

112 Program genre detection section

113 Genre-by-genre threshold value storage section

Best Mode for Carrying out the Invention

Preferred embodiments for carrying out the invention will be discussed in detail with reference to the accompanying drawings.

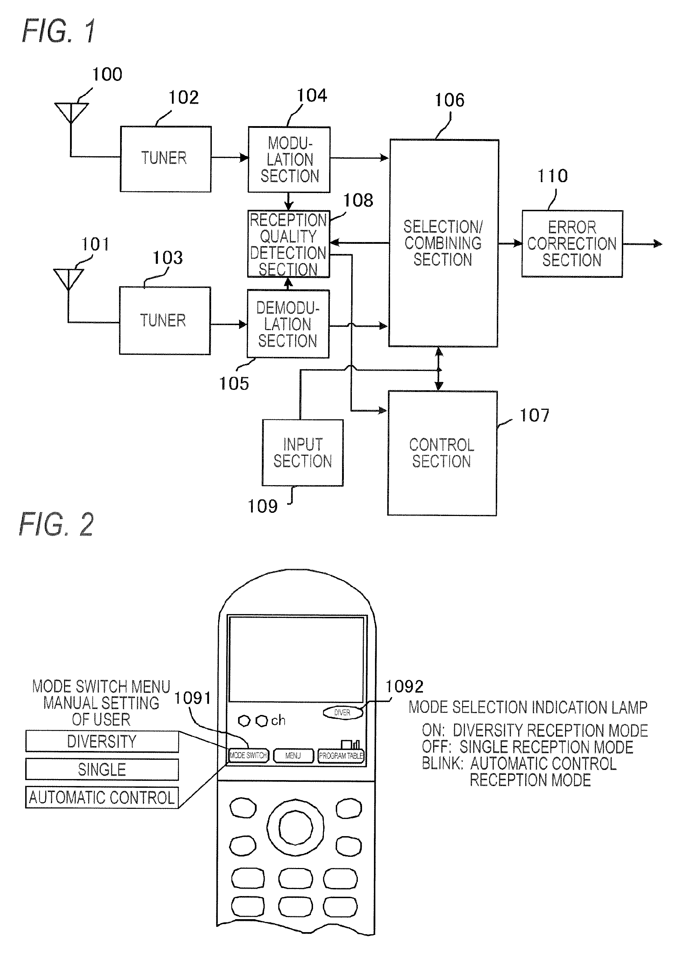

FIG. 1 is a block diagram to show the schematic configuration of a diversity receiver according to a first embodiment of the invention. In FIG. 1, the diversity receiver of the embodiment is a mobile terminal that can receive terrestrial digital] broadcasting, for example, and is made up of antennas 100 and 101 for capturing a wireless signal (digital modulation signal), tuners 102 and 103 for selecting a desired channel from the wireless signals captured at the antennas 100 and 101, demodulation sections 104 and 105 for demodulating the signals of the channel selected in the tuners 102 and 103, a selection/combining section 106, a control section (reception system switching section) 107, a reception quality detection section 108, an input section 109, and an error correction section 110. In the embodiment, two reception channels made up of the antennas 100 and 101, the tuners 102 and 103, and the demodulation sections 104 and 105 are included, and the signals demodulated in the reception channels are input to the selection/combining section 106.

The selection/combining section 106 combines or selects the signals from the reception channels in response to a command from the control section 107. The reception quality detection section 108 detects the reception quality from the signals received in the reception channels and the composite signal. The reception quality is determined by the signal error rate, the signal-to-noise ratio, the reception level, etc. The input section 109 receives entry of mode specification from the user and passes the mode specification to the control section 107. The input section 109 is provided with a plurality of buttons not shown for mode specification. FIG. 2 is a drawing to show the operation face of the input section 109. A mode switch button 1091 is used to set any of the three modes of diversity reception mode, single reception mode, and automatic control reception mode; the mode takes a transition from one to another each time the button is pressed. The mode specified with the mode switch button 1091 can be checked on a mode selection indication lamp 1092. For example, when the lamp is on, the diversity reception mode is indicated; when the lamp is off, the single reception mode is indicated; and when the lamp blinks, the automatic control reception mode is indicated.

Referring again to FIG. 1, the control section 107 switches the selection/combining section 106 in response to the mode specification obtained from the input section 109. That is, if the mode specification is the single reception mode, only the signal from one reception channel is selected and is passed to the error correction section 110; if the mode specification is the diversity reception mode, the signals from the reception channels are combined and the resultant signal is passed to the error correction section 110. When the mode is specified, the switch determination condition (threshold value) used in the automatic control reception mode is adjusted in response to mode selection information (information indicating the mode use frequency). The control section 107 also makes a control determination of the automatic control reception mode. It determines which of diversity reception and single reception is to be executed in response to the reception quality obtained in the reception quality detection section 108, and switches the selection/combining section 106 in response to the determination result. The error correction section 110 performs error correction processing for the signal obtained from the selection/combining section 106.

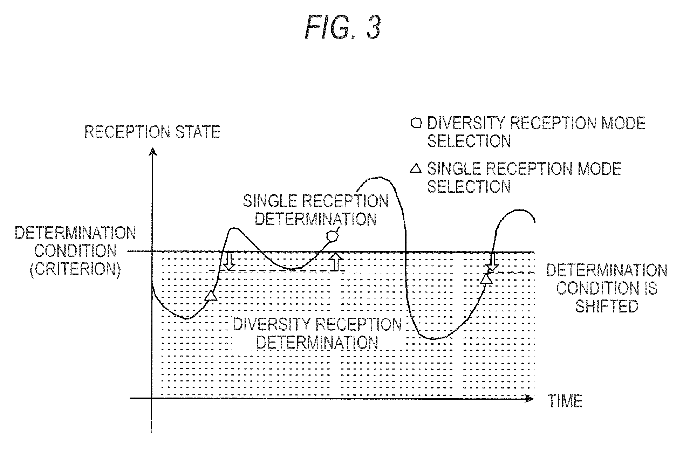

Next, adjustment of the determination condition (threshold value) used in the automatic control reception mode will be discussed with reference to FIG. 3. The determination condition of the automatic control reception mode changes according to mode selection information of the diversity reception mode and the single reception mode. The mode selection information is the mode selection frequency, the mode selection time, the reception state at the mode selection time, etc. As a determination method of the determination condition, for example, a determination condition used as a criterion is provided and if the mode selection frequency and the mode selection time are diversity reception mode > single reception mode, the condition is shifted to a determination condition in which diversity reception is easily selected in the automatic control reception mode. In this case, the determination condition may be provided with hysteresis. To reference the mode selection information, information within a past given time or a given number of pieces of information in the past may be used.

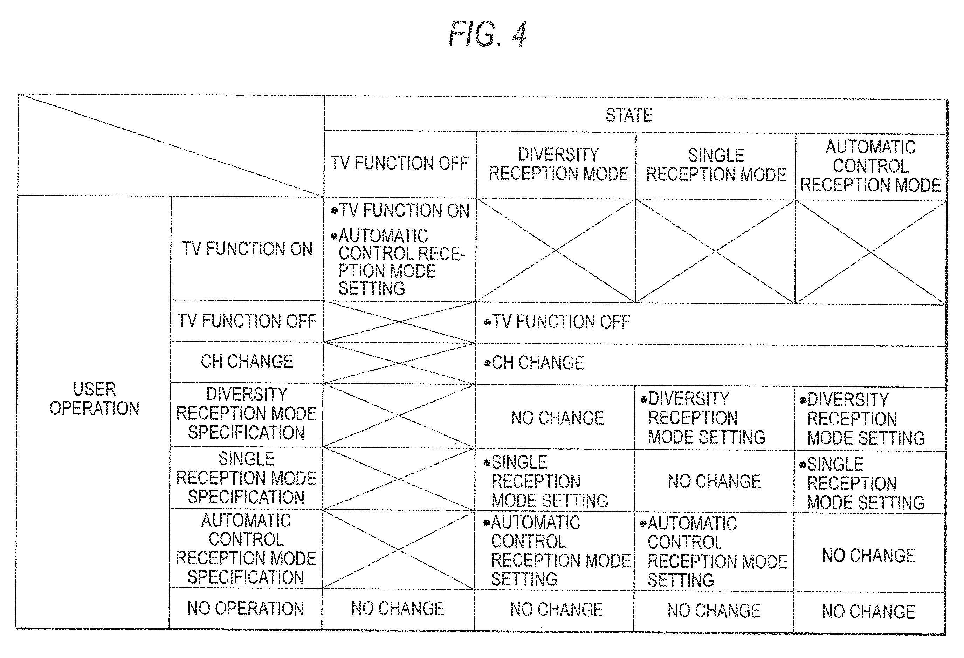

FIG. 4 is a drawing to show a state transition example according to user operation. The user can select a mode during viewing and specifies the diversity reception mode, the single reception mode, or the automatic control reception mode by manual operation. Control responsive to user's liking is performed only while the automatic control reception mode is specified.

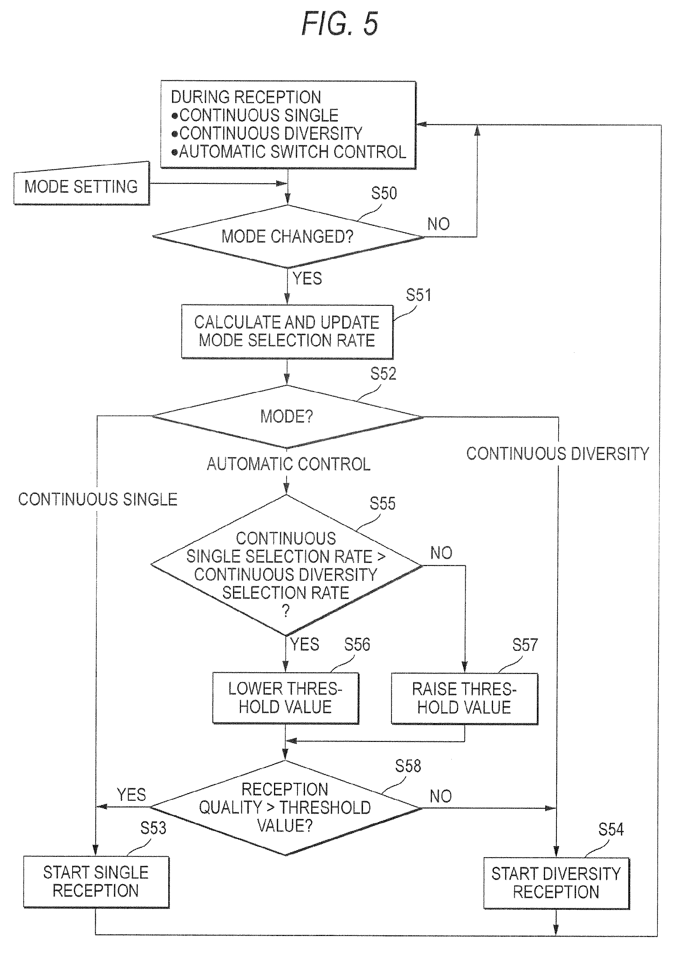

Next, the operation of the diversity receiver according to the embodiment is as follows: FIG. 5 is a flowchart to describe the operation of the diversity receiver according to the embodiment.

<Continuous single reception mode processing>

The selection/combining section 106 selects a signal from one of the two reception channels made up of the antennas 100 and 101, the tuners 102 and 103, and the demodulation sections 104 and 105, and passes the selected signal to the error correction section 110.

<Continuous diversity reception mode processing>

Reception signals from both the two reception channels of the antennas 100 and 101, the tuners 102 and 103, and the demodulation sections 104 and 105 are passed to the selection/combining section 106 for combining the two signals. The signal into which the signals are combined in the selection/combining section 106 is passed to the error correction section 110.

<Automatic control reception mode processing>

Single reception and diversity reception are switched in response to the reception quality. At the single reception time, a comparison is made between the reception quality of the used reception channel and a diversity reception start condition and if the condition is satisfied, the single reception is switched to the diversity reception. At the diversity reception time, a comparison is made between the reception quality of the composite signal and a single reception start condition and if the condition is satisfied, the diversity reception is switched to the single reception.

First, whether or not mode setting is made from the input section 109 is checked during reception in any mode (step S50). If mode setting is made, the mode selection rate is calculated and is updated (step S51). The mode selection rate is calculated according to the following expression (1), for example:

$$\text{Single reception mode selection rate} = \text{number of single}$$

$$\text{reception mode specification times/total number of all mode}$$

$$\text{specification times} \qquad (1)$$

The selected mode is determined (step S52) and if the single reception mode is specified, the selection/combining section 106 is set to selection and single reception mode processing is started (step S53). If the diversity reception mode is specified, the selection/combining section 106 is set to combining and diversity reception mode processing is started (step S54). If the automatic control reception mode is specified, a comparison is made between the single reception mode selection rate and the diversity reception mode selection rate (step S55) and if the single reception mode selection rate is higher, the condition is shifted to a determination condition in which single reception is easily selected (step S56). That is, the switching threshold value is lowered. In contrast, if the diversity reception mode selection rate is higher, the condition is shifted to a determination condition in which diversity reception is easily selected (step S57). That is, the switching threshold value is raised. If diversity reception is being executed at present, a comparison is made between the single reception start condition and the reception quality of the composite signal (step S58) and if the condition is satisfied, the diversity reception makes a transition to the single reception. If the condition is not satisfied, the diversity reception is continued. In contrast, if single reception is being executed at present, a comparison is made between the diversity reception start condition and the reception quality of the used branch (step S58) and if the condition is satisfied, the single reception makes a transition to the diversity reception. If the condition is not satisfied, the single reception is continued.

Thus, according to the diversity receiver of the embodiment, the determination condition of the automatic control reception mode is determined according to the user's selection manner of the single/diversity reception mode and the diversity receiver is customized so as to control with priority assigned to the single reception for the user often using the single reception mode and with priority assigned to the diversity reception for the user often using the diversity reception mode, so that it is made possible to perform control matched with user's liking in the automatic control reception mode without executing mode selection.

In the embodiment described above, if the diversity reception mode or the single reception mode is specified, the specified mode is continued unless the user again makes mode specification. However, if the diversity reception mode or the single reception mode is specified, the receiver may operate the mode as specified for a specific time and then may automatically make a transition to the automatic control reception mode. Alternatively, when a TV function is again started or the channel is changed, the mode may be returned to the automatic control reception mode.

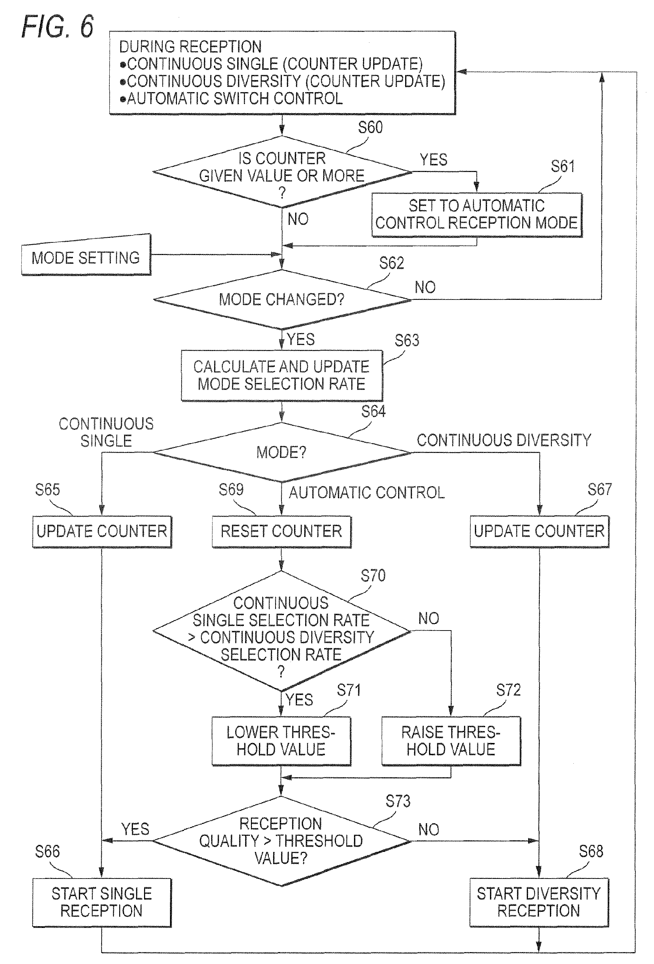

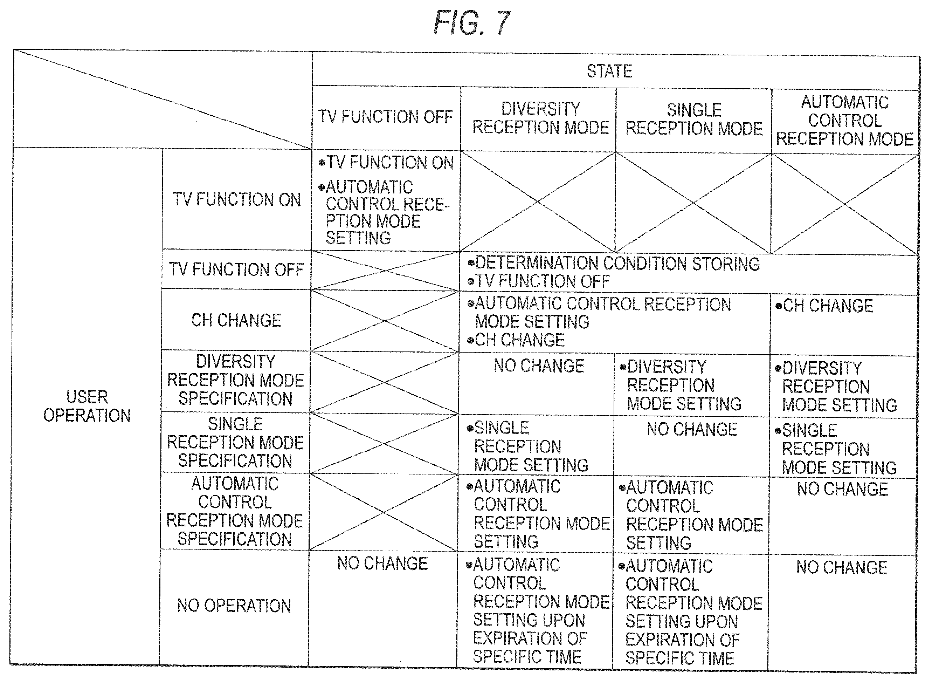

FIG. 6 is a flowchart to show processing to make an automatic transition to the automatic control reception mode using a counter. FIG. 7 is a drawing to show a state transition example according to user operation. In FIG. 6, first, whether or not the counter is a given value or more is checked during reception in any mode (step S60). If the counter is the given value or more, the automatic control reception mode is set (step S61) and then a transition is made to the next processing. If the counter is less than the given value, no operation is performed and a transition is made to the next processing. In the next processing, whether or not mode setting is made from the input section 109 is checked (step S62). If mode setting is made, the mode selection rate is calculated and is updated (step S63). The mode selection rate is calculated according to expression (1) described above, for example.

Next, the selected mode is determined (step S64) and if the single reception mode is specified, the counter is updated (step S65) and then the selection/combining section 106 is set to selection and single reception mode processing is started (step S66). If the diversity reception mode is specified, the counter is updated (step S67) and then the selection/combining section 106 is set to combining and diversity reception mode processing is started (step S68). If the automatic control reception mode is specified, the counter is reset (step S69) and then a comparison is made between the single reception mode selection rate and the diversity reception mode selection rate (step S70) and if the single reception mode selection rate is higher, the condition is shifted to the determination condition in which single reception is easily selected (step S71). That is, the switching threshold value is lowered. In contrast, if the diversity reception mode selection rate is higher, the condition is shifted to the determination condition in which diversity reception is easily selected (step S72). That is, the switching threshold value is raised. If diversity reception is being executed at present, a comparison is made between the single reception start condition and the reception quality of the composite signal (step S73) and if the condition is satisfied, the diversity reception makes a transition to the single reception. If the condition is not satisfied, the diversity reception is continued. In contrast, if single reception is being executed at present, a comparison is made between the diversity reception start condition and the reception quality of the used branch (step S73) and if the condition is satisfied, the single reception makes a transition to the diversity reception. If the condition is not satisfied, the single reception is continued.

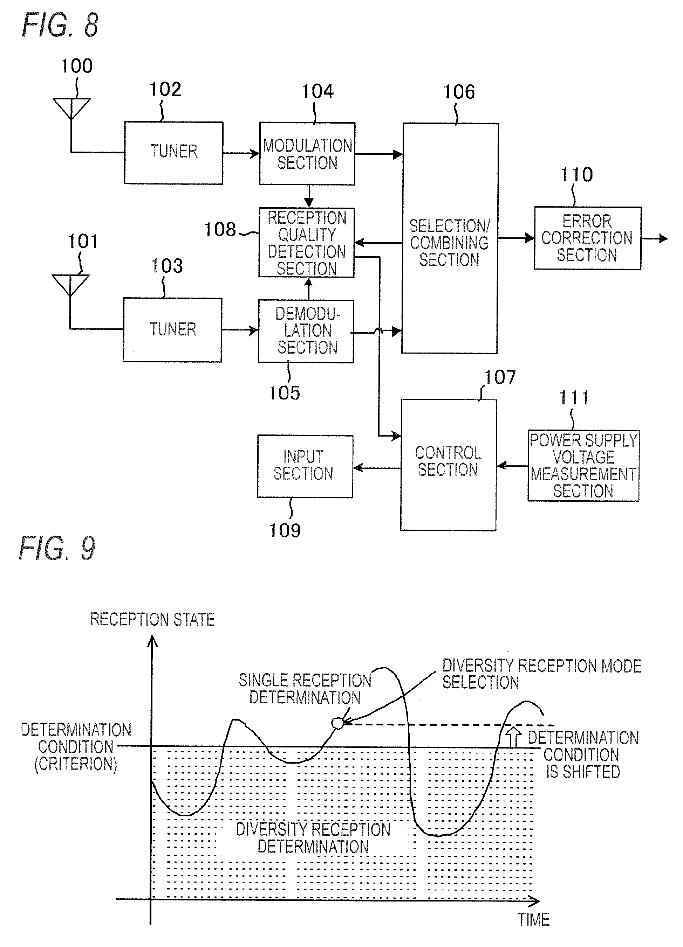

Next, a second embodiment of the invention will be discussed. FIG. 8 is a block diagram to show the schematic configuration of a diversity receiver according to a second embodiment of the invention. The diversity receiver of the second embodiment differs from the diversity receiver of the first embodiment in that the mode selection rate is used as the mode selection information in the diversity receiver of the first embodiment; while, the reception quality and the battery remaining amount at the mode selection time are used in the diversity receiver of the second embodiment, and the diversity receiver of the second embodiment includes a power supply voltage measurement section 111 for measuring the battery remaining amount in addition to components similar to those of the first embodiment. The power supply voltage measurement section 111 measures the battery remaining amount and passes the measurement result to a control section 107. The control section 107 switches a selection/combining section 106 in response to mode specification obtained from an input section 109. That is, if a single reception mode is specified, only the signal from one reception channel is selected and is passed to an error correction section 110; if a diversity reception mode is specified, the signals from reception channels are combined and the resultant signal is passed to the error correction section 110. When the mode is specified, the determination condition used in an automatic control reception mode is adjusted in response to mode selection information. The control section 107 also makes a control determination of the automatic control reception mode. The control section 107 determines which of diversity reception and single reception is to be executed in response to the reception quality obtained in a reception quality detection section 108, and switches the selection/combining section 106 in response to the determination result.

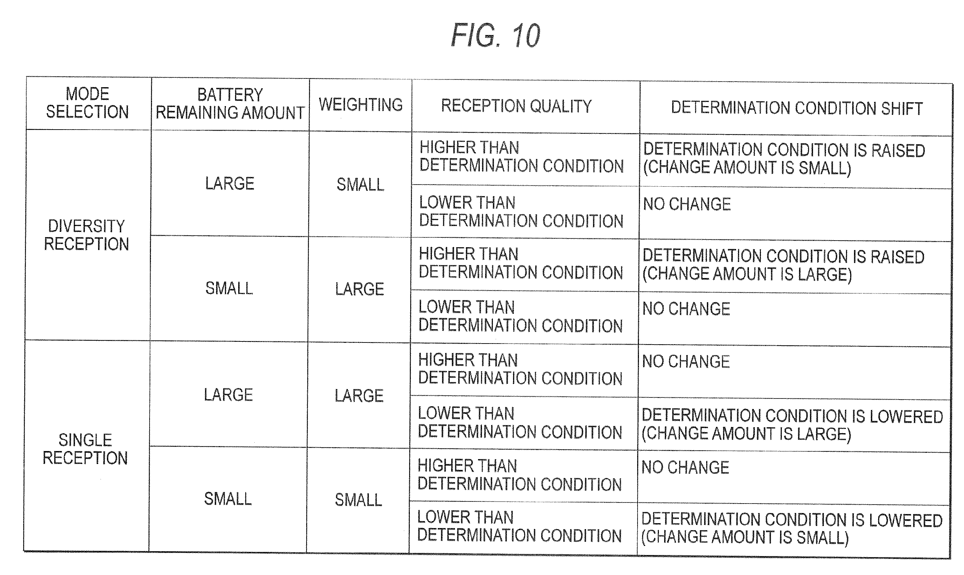

Next, adjustment of the determination condition (threshold value) used in the automatic control reception mode will be discussed with reference to FIG. 9. The reception state and the battery remaining amount at the mode selection time are used as the mode selection information used in determining the determination condition of the automatic control reception mode. As a determination method of the determination condition, a determination condition used as a criterion is provided and if the reception state when the diversity reception mode is selected is better than an automatic control diversity reception start condition, the condition is shifted to a determination condition in which diversity reception is easily selected in the automatic control. Weighting of the mode selection information is changed in response to the battery remaining amount. For example, since the diversity reception mode consumes much current, if the diversity reception mode is selected in a state in which the battery remaining amount is large, weighting is lessened; if the diversity reception mode is selected although the battery remaining amount is small, weighting is increased. FIG. 10 lists adjustment of the determination condition (threshold value) used in the automatic control reception mode as a table.

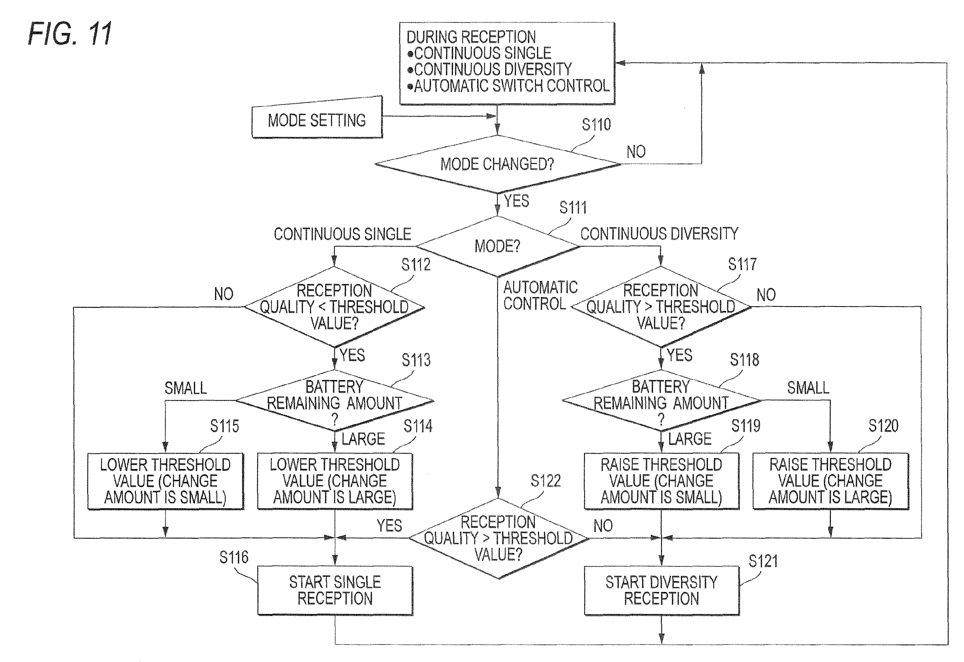

Next, the operation of the diversity receiver according to the embodiment is as follows: FIG. 11 is a flowchart to describe the operation of the diversity receiver according to the embodiment. In the figure, first, whether or not mode setting is made from the input section 109 is checked during reception in any mode (step S110). If mode setting is made, the selected mode is determined (step S111) and processing corresponding to the mode is performed; if mode setting is not made, reception is continued in the current mode. If the single reception mode is specified, the selection/combining section 106 is set to selection and the reception quality of a selected signal is acquired and is compared with the determination condition used in automatic control (step S112). If the reception quality is poorer than the determination condition, the determination condition is lowered. At this time, to determine the change amount of the determination condition, the battery remaining amount is checked by the battery voltage measurement section 111 (step S113). If the battery remaining amount is large, the change amount is set large (step S114); if the battery remaining amount is small, the change amount is set small (step S115). If it is determined at step S112 that the reception quality is better than the determination condition, the determination condition remains unchanged and single reception mode processing is started (step S116).

If it is determined at step S111 that the diversity reception mode is specified, the selection/combining section 106 is set to combining and the reception quality of the composite signal is acquired and is compared with the determination condition used in automatic control (step S117). If the reception quality is better than the determination condition, the determination condition is raised. At this time, to determine the change amount of the determination condition, the battery remaining amount is checked by the battery voltage measurement section 111 (step S118). If the battery remaining amount is large, the change amount is set small (step S119); if the battery remaining amount is small, the change amount is set large (step S120). If it is determined at step S117 that the reception quality is poorer than the determination condition, the determination condition remains unchanged and diversity reception mode processing is started (step S121).

On the other hand, if it is determined at step S111 that the automatic control reception mode is specified, when diversity reception is being executed at present, a comparison is made between the single reception start condition and the reception quality of the composite signal (step S122) and if the condition is satisfied, the diversity reception makes a transition to the single reception (step S116). If the condition is not satisfied, the diversity reception is continued (step S121). In contrast, when single reception is being executed at present, a comparison is made between the diversity reception start condition and the reception quality of the used reception channel (step S122) and if the condition is satisfied, the single reception makes a transition to the diversity reception. If the condition is not satisfied, the single reception is continued.

Thus, according to the diversity receiver of the embodiment, the determination condition of the automatic control reception mode is determined based on the reception quality at the selection time of the single or diversity reception mode and the diversity receiver is customized so as to control it so as to execute single reception in the reception quality considered for the user to want the single reception mode and so as to execute diversity reception in the reception quality considered for the user to want the diversity reception mode, so that it is made possible to perform control matched with user's liking in the automatic control reception mode without executing mode selection.

The battery remaining amount is considered, whereby it is made possible to determine the strength of the user's need for single or diversity reception (the need is strong if the user selects the diversity reception mode with large current consumption although the battery remaining amount is small) and shorten the time to convergence to the control matched with user's liking.

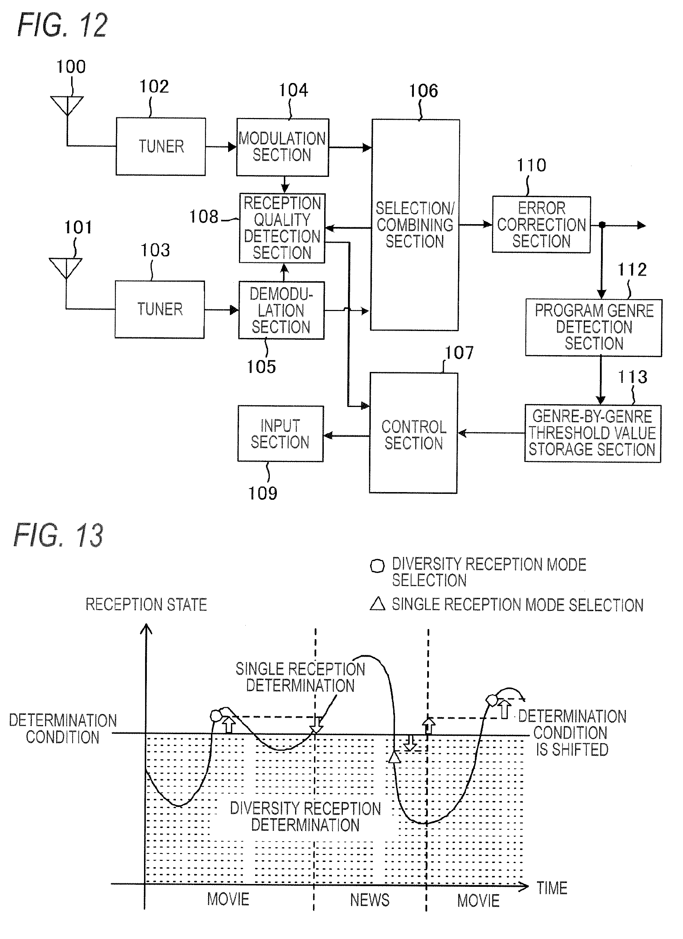

Next, a third embodiment of the invention will be discussed. FIG. 12 is a block diagram to show the schematic configuration of a diversity receiver according to a third embodiment of the invention. The diversity receiver of the third embodiment includes a program genre detection section 112 for detecting the genre of the program being viewed and a genre-by-genre threshold value storage section 113 for storing the determination condition (threshold value) for each program genre in addition to the same components as the diversity receiver of the first embodiment. Program genre information is contained in terrestrial digital] broadcasting and is used in the third embodiment. A control section 107 switches a selection/combining section 106 in response to mode specification obtained from an input section 109. When a mode is specified, the control section adjusts the determination condition used in an automatic control reception mode in response to mode selection information. At this time, the determination condition responsive to the genre of the program being viewed is selected from among the determination conditions stored in the genre-by-genre threshold value storage section 113 and is adjusted. The control section 107 also makes a control determination of the automatic control reception mode. The determination condition responsive to the genre of the program being viewed is used. The control section 107 determines which of diversity reception and single reception is to be executed in response to the reception quality obtained in a reception quality detection section 108, and switches the selection/combining section 106 in response to the determination result.

Next, adjustment of the determination condition (threshold value) used in the automatic control reception mode will be discussed with reference to FIG. 13. The determination conditions of the automatic control reception mode are provided in a one-to-one correspondence with the viewed program genres (movie, news, etc.,). When the determination condition is changed or is used to make a determination, the genre of the program being viewed is determined and the determination condition for each program genre is read. For example, if the determination condition (movie) varies according to mode specification, when the program to be viewed changes, the determination condition (news) responsive to the genre is newly read. However, the variation in the determination condition (movie) is reflected on the genre-by-genre threshold value storage section 113 storing the determination conditions and thus when a program of the same genre is viewed, the determination condition (movie) after the variation is used.

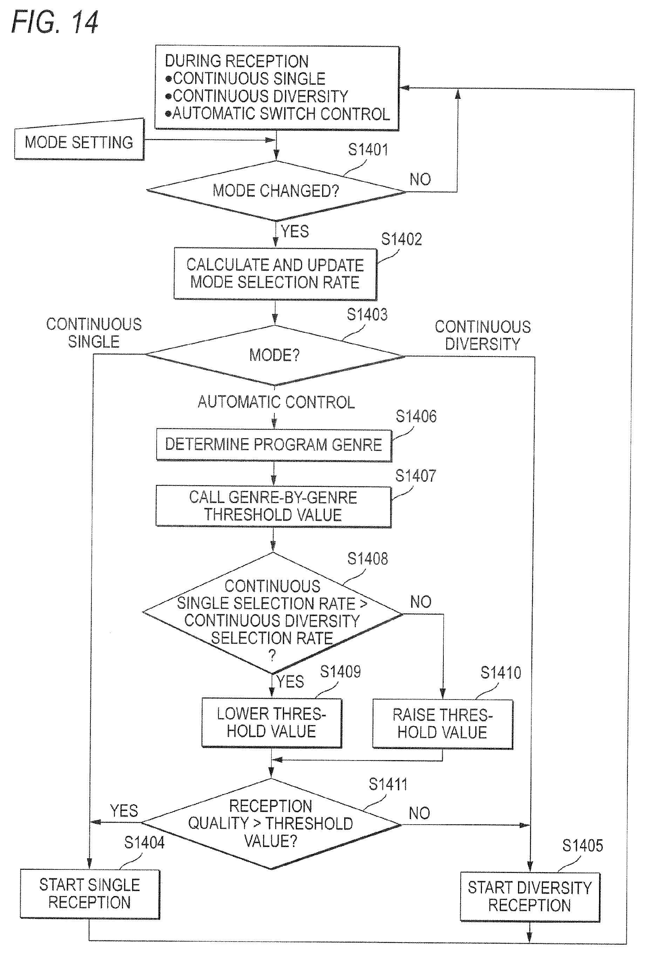

Next, the operation of the diversity receiver according to the embodiment is as follows: FIG. 14 is a flowchart to describe the operation of the diversity receiver according to the embodiment. In the figure, first, whether or not mode setting is made from the input section 109 is checked during reception in any mode (step S1401). If mode setting is made, the mode selection rate is calculated and is updated (step S1402). The mode selection rate is calculated according to expression (1) described above, for example.

If mode setting is made, the selected mode is determined (step S1403) and processing corresponding to the mode is performed; if mode setting is not made, reception is continued in the current mode. If the single reception mode is specified, the selection/combining section 106 is set to selection and single reception mode processing is started (step S1404). If the diversity reception mode is specified, the selection/combining section 106 is set to combining and diversity reception mode processing is started (step S1405). If the automatic control reception mode is specified, the genre of the program being viewed is determined (step S1406) and the genre-by-genre determination condition is called (step S1407). The subsequent process is the same as the determination condition correction in the first embodiment except that the genre-by-genre determination condition is corrected. That is, a comparison is made between the single reception mode selection rate and the diversity reception mode selection rate (step S1408) and if the single reception mode selection rate is higher, the condition is shifted to a determination condition in which single reception is easily selected. That is, the threshold value is lowered (step S1409). If the diversity reception mode selection rate is higher, the condition is shifted to a determination condition in which diversity reception is easily selected. That is, the switching threshold value is raised (step S1410). The changed determination condition is stored in the genre-by-genre threshold value storage section 113.

If diversity reception is being executed at present, a comparison is made between the single reception start condition and the reception quality of the composite signal (step S1411) and if the condition is satisfied, the diversity reception makes a transition to the single reception. If the condition is not satisfied, the diversity reception is continued. In contrast, if single reception is being executed at present, a comparison is made between the diversity reception start condition and the reception quality of the used branch (step S1411) and if the condition is satisfied, the single reception makes a transition to the diversity reception. If the condition is not satisfied, the single reception is continued.

Thus, according to the diversity receiver of the embodiment, the determination condition of the automatic control reception mode is determined according to the selection manner of the single/diversity reception mode and different determination conditions are provided in a one-to-one correspondence with the program genres, so that if the used mode varies from one program genre to another, it is made possible to perform control matched with user's liking (for example, priority is assigned to the image quality for movies; priority is assigned to the viewing time for news, etc.,).

In the description of the embodiments, the two channels of the antennas 100 and 101, the tuners 102 and 103, and the demodulation sections 104 and 105 are installed, but similar advantages can also be provided if more than two channels are installed.

While the invention has been described in detail with reference to the specific embodiments, it will be obvious to those skilled in the art that various changes and modifications can be made without departing from the spirit and the scope of the invention.

Industrial Applicability

The invention has the advantage that diversity reception start and stop can be controlled according to the switch condition responsive to person's liking and the use environment, and can be applied to a diversity receiver using a plurality of reception branches, particularly to a mobile telephone, a car navigation system, etc., that can receive terrestrial digital] broadcasting.

**Claims**

1. A diversity receiver comprising a plurality of reception channels for switching between diversity reception using a plurality of reception channels and single reception using a single reception channel, the diversity receiver comprising:

an input section for allowing a user to select and specify any of a diversity reception mode using the plurality of reception channels at all times, a single reception mode using a single reception channel at all times, or an automatic control reception mode for switching between the diversity reception and the single reception in response to the reception state of each mode; and

a reception system switching section for determining a determination condition to switch between the diversity reception and the single reception in response to mode selection information of the other two modes in the automatic control reception mode and switching the reception system.

2. The diversity receiver according to claim 1, wherein the reception system switching section uses a selection rate of each mode as the mode selection information.

3. The diversity receiver according to claim 1, wherein the reception system switching section uses a reception quality at the selection time of each mode as the mode selection information.

4. The diversity receiver according to claim 3 further comprising a power supply voltage measurement section for detecting a remaining amount of a battery used in the receiver main unit,

wherein the reception system switching section uses the battery remaining amount at the selection time of each mode as the mode selection information.

5. The diversity receiver according to any of claims 1 to 4 further comprising:

a program genre detection section for detecting a genre of a program being viewed; and
a genre-by-genre threshold value storage section for storing the determination condition for each genre,
wherein the reception system switching section sets the determination condition for each genre of the program being viewed.

6. A reception system switching method for switching between diversity reception using a plurality of reception channels and single reception using a single reception channel, the reception system switching method comprising:

allowing a user to select any of a diversity reception mode using the plurality of reception channels at all times, a single reception mode using a single reception channel at all times, or an automatic control reception mode for switching between the diversity reception and the single reception in response to the reception state of each mode, and

if the automatic control reception mode is selected, determining a determination condition to switch between the diversity reception and the single reception in response to mode selection information of the other two modes in the automatic control reception mode and switching the reception system.

# FIG. 1

# FIG. 2

MODE SWITCH MENU
MANUAL SETTING
OF USER 1091

| DIVERSITY |
| SINGLE |
| AUTOMATIC CONTROL |

1092

MODE SELECTION INDICATION LAMP

ON: DIVERSITY RECEPTION MODE
OFF: SINGLE RECEPTION MODE
BLINK: AUTOMATIC CONTROL
RECEPTION MODE

# FIG. 3

## FIG. 4

| | | STATE | | | |
|---|---|---|---|---|---|
| | | TV FUNCTION OFF | DIVERSITY RECEPTION MODE | SINGLE RECEPTION MODE | AUTOMATIC CONTROL RECEPTION MODE |
| USER OPERATION | TV FUNCTION ON | ●TV FUNCTION ON<br>●AUTOMATIC CONTROL RECE-PTION MODE SETTING | | | |
| | TV FUNCTION OFF | | ●TV FUNCTION OFF | | |
| | CH CHANGE | | ●CH CHANGE | | |
| | DIVERSITY RECEPTION MODE SPECIFICATION | | NO CHANGE | ●DIVERSITY RECEPTION MODE SETTING | ●DIVERSITY RECEPTION MODE SETTING |
| | SINGLE RECEPTION MODE SPECIFICATION | | ●SINGLE RECEPTION MODE SETTING | NO CHANGE | ●SINGLE RECEPTION MODE SETTING |
| | AUTOMATIC CONTROL RECEPTION MODE SPECIFICATION | | ●AUTOMATIC CONTROL RECEPTION MODE SETTING | ●AUTOMATIC CONTROL RECEPTION MODE SETTING | NO CHANGE |
| | NO OPERATION | NO CHANGE | NO CHANGE | NO CHANGE | NO CHANGE |

## FIG. 5

DURING RECEPTION
- CONTINUOUS SINGLE
- CONTINUOUS DIVERSITY
- AUTOMATIC SWITCH CONTROL

MODE SETTING

S50

MODE CHANGED? — NO

YES

S51

CALCULATE AND UPDATE MODE SELECTION RATE

S52

MODE?

CONTINUOUS SINGLE

AUTOMATIC CONTROL

CONTINUOUS DIVERSITY

S55

CONTINUOUS SINGLE SELECTION RATE > CONTINUOUS DIVERSITY SELECTION RATE ? — NO

YES S56

S57

LOWER THRESHOLD VALUE

RAISE THRESHOLD VALUE

S58

YES

RECEPTION QUALITY > THRESHOLD VALUE? — NO

S53

S54

START SINGLE RECEPTION

START DIVERSITY RECEPTION

13

# FIG. 6

## FIG. 7

| USER OPERATION \ STATE | TV FUNCTION OFF | DIVERSITY RECEPTION MODE | SINGLE RECEPTION MODE | AUTOMATIC CONTROL RECEPTION MODE |
|---|---|---|---|---|
| TV FUNCTION ON | •TV FUNCTION ON<br>•AUTOMATIC CONTROL RECEPTION MODE SETTING | | | |
| TV FUNCTION OFF | | •DETERMINATION CONDITION STORING<br>•TV FUNCTION OFF | | |
| CH CHANGE | | •AUTOMATIC CONTROL RECEPTION MODE SETTING<br>•CH CHANGE | | •CH CHANGE |
| DIVERSITY RECEPTION MODE SPECIFICATION | | NO CHANGE | •DIVERSITY RECEPTION MODE SETTING | •DIVERSITY RECEPTION MODE SETTING |
| SINGLE RECEPTION MODE SPECIFICATION | | •SINGLE RECEPTION MODE SETTING | NO CHANGE | •SINGLE RECEPTION MODE SETTING |
| AUTOMATIC CONTROL RECEPTION MODE SPECIFICATION | | •AUTOMATIC CONTROL RECEPTION MODE SETTING | •AUTOMATIC CONTROL RECEPTION MODE SETTING | NO CHANGE |
| NO OPERATION | NO CHANGE | •AUTOMATIC CONTROL RECEPTION MODE SETTING UPON EXPIRATION OF SPECIFIC TIME | •AUTOMATIC CONTROL RECEPTION MODE SETTING UPON EXPIRATION OF SPECIFIC TIME | NO CHANGE |

*FIG. 8*

100

102
TUNER

104
MODULATION
SECTION

106
SELECTION/
COMBINING
SECTION

110
ERROR
CORRECTION
SECTION

108
RECEPTION
QUALITY
DETECTION
SECTION

101

103
TUNER

105
DEMODU-
LATION
SECTION

107
CONTROL
SECTION

111
POWER SUPPLY
VOLTAGE
MEASUREMENT
SECTION

109
INPUT
SECTION

*FIG. 9*

RECEPTION STATE

DIVERSITY RECEPTION MODE
SELECTION

SINGLE RECEPTION
DETERMINATION

DETERMINATION
CONDITION
(CRITERION)

DETERMINATION
CONDITION
IS SHIFTED

DIVERSITY RECEPTION
DETERMINATION

TIME

## FIG. 10

| MODE SELECTION | BATTERY REMAINING AMOUNT | WEIGHTING | RECEPTION QUALITY | DETERMINATION CONDITION SHIFT |
|---|---|---|---|---|
| DIVERSITY RECEPTION | LARGE | SMALL | HIGHER THAN DETERMINATION CONDITION | DETERMINATION CONDITION IS RAISED (CHANGE AMOUNT IS SMALL) |
| | | | LOWER THAN DETERMINATION CONDITION | NO CHANGE |
| | SMALL | LARGE | HIGHER THAN DETERMINATION CONDITION | DETERMINATION CONDITION IS RAISED (CHANGE AMOUNT IS LARGE) |
| | | | LOWER THAN DETERMINATION CONDITION | NO CHANGE |
| SINGLE RECEPTION | LARGE | LARGE | HIGHER THAN DETERMINATION CONDITION | NO CHANGE |
| | | | LOWER THAN DETERMINATION CONDITION | DETERMINATION CONDITION IS LOWERED (CHANGE AMOUNT IS LARGE) |
| | SMALL | SMALL | HIGHER THAN DETERMINATION CONDITION | NO CHANGE |
| | | | LOWER THAN DETERMINATION CONDITION | DETERMINATION CONDITION IS LOWERED (CHANGE AMOUNT IS SMALL) |

*FIG. 11*

DURING RECEPTION
• CONTINUOUS SINGLE
• CONTINUOUS DIVERSITY
• AUTOMATIC SWITCH CONTROL

MODE SETTING

S110
MODE CHANGED?   NO

YES   S111

CONTINUOUS SINGLE   MODE?   CONTINUOUS DIVERSITY

AUTOMATIC CONTROL

NO   S112
RECEPTION QUALITY < THRESHOLD VALUE?

YES   S113
BATTERY REMAINING AMOUNT?

SMALL   LARGE   S114

S115
LOWER THRESHOLD VALUE (CHANGE AMOUNT IS SMALL)

LOWER THRESHOLD VALUE (CHANGE AMOUNT IS LARGE)

S117
RECEPTION QUALITY > THRESHOLD VALUE?   NO

YES   S118
BATTERY REMAINING AMOUNT?   SMALL

LARGE   S119

RAISE THRESHOLD VALUE (CHANGE AMOUNT IS SMALL)

S120
RAISE THRESHOLD VALUE (CHANGE AMOUNT IS LARGE)

S122
YES   RECEPTION QUALITY > THRESHOLD VALUE?   NO

S116
START SINGLE RECEPTION

S121
START DIVERSITY RECEPTION

EP 2 001 144 A1

18

*FIG. 12*

*FIG. 13*

## FIG. 14

DURING RECEPTION
• CONTINUOUS SINGLE
• CONTINUOUS DIVERSITY
• AUTOMATIC SWITCH CONTROL

MODE SETTING

S1401
MODE CHANGED? —— NO

YES

S1402
CALCULATE AND UPDATE MODE SELECTION RATE

CONTINUOUS SINGLE

S1403
MODE?

CONTINUOUS DIVERSITY

AUTOMATIC CONTROL

S1406
DETERMINE PROGRAM GENRE

S1407
CALL GENRE-BY-GENRE THRESHOLD VALUE

S1408
CONTINUOUS SINGLE SELECTION RATE > CONTINUOUS DIVERSITY SELECTION RATE ? —— NO

YES  S1409
LOWER THRES-HOLD VALUE

S1410
RAISE THRES-HOLD VALUE

S1411
YES  RECEPTION QUALITY > THRESHOLD VALUE? —— NO

S1404
START SINGLE RECEPTION

S1405
START DIVERSITY RECEPTION

FIG. 15

| DIVERSITY RECEPTION |

COMBINE

RECEPTION STATE
MEASUREMENT

SWITCH

| SINGLE RECEPTION |

OFF

SINGLE

RECEPTION STATE
MEASUREMENT

FIG. 16

DIVERSITY RECEPTION        SINGLE RECEPTION

POOR        SWITCHING THRESHOLD VALUE        GOOD

RECEPTION
STATE

## INTERNATIONAL SEARCH REPORT

| International application No. |
| --- |
| PCT/JP2006/306265 |

| A. CLASSIFICATION OF SUBJECT MATTER |
| --- |
| **H04B7/08**(2006.01) |

According to International Patent Classification (IPC) or to both national classification and IPC

| B. FIELDS SEARCHED |
| --- |
| Minimum documentation searched (classification system followed by classification symbols)<br>H04B7/08 |

Documentation searched other than minimum documentation to the extent that such documents are included in the fields searched

| Jitsuyo Shinan Koho | 1922-1996 | Jitsuyo Shinan Toroku Koho | 1996-2006 |
| --- | --- | --- | --- |
| Kokai Jitsuyo Shinan Koho | 1971-2006 | Toroku Jitsuyo Shinan Koho | 1994-2006 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2000-183793 A (Fujitsu Ltd.),<br>30 June, 2000 (30.06.00),<br>Full text; Figs. 1 to 13<br>(Family: none) | 1,3,6<br>4<br>2,5 |
| Y | JP 2003-504957 A (Telefonaktiebolaget LM Ericsson(publ)),<br>04 February, 2003 (04.02.03),<br>Full text; Figs. 1 to 6<br>& WO 2001/005088 A1 & EP 1197025 A1<br>& US 7024168 B1 | 4 |
| Y | JP 2003-037547 A (Kyocera Corp.),<br>07 February, 2003 (07.02.03),<br>Full text; Figs. 1 to 2<br>(Family: none) | 4 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 June, 2006 (13.06.06) | 20 June, 2006 (20.06.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2006/306265 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2004-297281 A  (Sanyo Electric Co., Ltd.), 21 October, 2004 (21.10.04), Full text; Figs. 1 to 9 & EP 1463215 A2        & US 2004/0189519 A1 | 1-6 |
| A | JP 2002-271239 A  (Kenwood Corp.), 20 September, 2002 (20.09.02), Full text; Figs. 1 to 5 (Family: none) | 1-6 |
| A | JP 2004-343210 A  (Sharp Corp.), 02 December, 2004 (02.12.04), Full text; Figs. 1 to 10 (Family: none) | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6284062 A